(19) Europäisches Patentamt / European Patent Office / Office européen des brevets

(11) **EP 1 720 081 B1**

(12) **EUROPEAN PATENT SPECIFICATION**

(45) Date of publication and mention
of the grant of the patent:
**19.03.2008 Bulletin 2008/12**

(51) Int Cl.:
***G05B 13/04*** (2006.01)

(21) Application number: **06113247.8**

(22) Date of filing: **27.04.2006**

(54) **Self-adaptive regulation apparatus for controlling the position of actuators in an actuation system by means of the sliding-mode technique and corresponding method of operation**

Autoadaptives Einstellungsgerät zur Positionssteuerung von Aktuatoren in einem Antriebssystem mittels Gleitmodusverfahren und entsprechendes Betriebsverfahren

Appareil de réglage autoadapteur pour contrôler la position des acteurs dans un système d'actionnement aux moyens de la technique de mode de glissement et du procédé d'opération correspondant

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.04.2005 IT TO20050290**

(43) Date of publication of application:
**08.11.2006 Bulletin 2006/45**

(73) Proprietor: **ANSALDO ENERGIA S.P.A.**
**16152 Genova (IT)**

(72) Inventors:
• **Lombardi, Filippo**
**16026 Montoggio (IT)**
• **Cacciacarne, Stefano**
**16148 Genova (IT)**

(74) Representative: **Jorio, Paolo et al**
**Studio Torta S.r.l.**
**Via Viotti, 9**
**10121 Torino (IT)**

(56) References cited:
**EP-A- 0 446 362**   **US-A- 5 988 848**
**US-B1- 6 574 544**

• **RALPH G BERSTECHER ET AL: "An Adaptive Fuzzy Sliding-Mode Controller" IEEE TRANSACTIONS ON INDUSTRIAL ELECTRONICS, IEEE SERVICE CENTER, PISCATAWAY, NJ, US, vol. 48, no. 1, February 2001 (2001-02), pages 18-31, XP011023764 ISSN: 0278-0046**

## EP 1 720 081 B1

**Description**

The present invention relates to a self-adaptive regulation apparatus for controlling the position of one or more actuators in an actuation system by means of the sliding-mode technique and to the corresponding method of operation.

In particular, the present invention relates to a regulation apparatus, which is able to configure in a completely automatic way the regulation parameters used for controlling the position of one or more actuators designed to drive a valve for regulation of the fluid evolving in a gas or steam or water turbine (turbo-machine), to which the following description refers purely by way of example.

As is known, currently, in the field of regulation of the fluid (whether gas, steam or water) supplied to turbines, electrohydraulic systems are used, which are basically constituted by an actuation system, which comprises a hydraulic cylinder, commonly referred to as "servomotor" that is able to actuate the valve that regulates the fluid supplied to the turbine, and by an electrohydraulic converter, designed to modulate the flow of the hydraulic fluid that displaces the piston in the hydraulic cylinder of the servomotor.

The electrohydraulic systems mentioned above further comprise an electronic regulation system, referred to hereinafter as "regulation apparatus", which is able to implement a set of closed-loop controls, i.e., feedback controls, which envisage comparison of the physical quantity/quantities measured which is/are to be controlled (typically the position of the electrohydraulic converter, and/or the position of the servo motor) with the respective desired reference values, and process said quantity or quantities according to a pre-set control procedure, as a function of which an electrical control signal is generated, which drives the electrohydraulic converter to modulate delivery of the fluid to the turbine.

It is moreover known that so far, electrohydraulic systems for movement of regulation valves of turbines may be classified basically in three different types, each of which is characterized by the pressure of the hydraulic fluid available for their operation.

In particular, a first class of electrohydraulic systems is constituted by systems supplied by a hydraulic fluid at a low pressure (between 6 and 15 bar), which generally comprise four control loops cascaded to one another; a second class is, instead, constituted by systems that are supplied by a hydraulic fluid at a medium pressure (between 30 and 60 bar) and have a circuit configuration with three control loops cascaded to one another; finally, the third class is represented by systems supplied by a hydraulic fluid at a high pressure (between 90 and 200 bar) and generally comprise a single control loop.

According to the class to which the electrohydraulic system belongs, the electrohydraulic converter can comprise a proportional valve or a servo valve, the control of which represents, for the electronic regulation systems described above, one of the points of greater criticality, in so far as it is conditioned by a considerable number of parametric uncertainties of the electrohydraulic system.

In other words, the electrohydraulic system is markedly conditioned by the proportional valve and/or the servo valve, the behaviour of which is affected by a plurality of variables, such as, for example, various types of friction, hydrodynamic reactions, magnetic hysteresis, viscosity of the fluid, etc.

The presence of said uncertainties renders the operation of initial calibration of the control parameters used by the electrohydraulic system extremely laborious and complex. Said calibration operations are in fact normally carried out by an operator on the basis of the class to which the system belongs.

In addition, the electrohydraulic systems described above present the major problem of severe limits in terms of static/dynamic performance, as regards precision, rapidity of response, and the damping coefficient of the system.

In fact, since turbines are machines that are very sensitive to the variations of flow rate, it becomes necessary, for the purposes of a stable regulation of the speed and of the load, to have available very precise and fast actuators. Obtaining such a performance involves the use of very sophisticated electrohydraulic converters, which lead, however, to an evident increase in the complexity of the regulation of the position in the electrohydraulic system. In the case in point, it frequently occurs that, in order to improve the performance of the electrohydraulic system, calibrations of the control parameters are made up to the limit of stability, determining, however, a loss in the regulation "robustness" (insensitivity to uncertainties on the parameters of the regulated system). In this case, a even just a slight variation of a few parameters can jeopardize stability of the entire regulation loop, with the result of having to stop the machine for a new calibration of the parameters.

Furthermore, sliding-mode controllers are known from US 5988848, US 6574544 and EP 0446362.

The aim of the present invention is hence to provide a self-adaptive regulation apparatus for controlling the position of actuators in an actuation system by means of the sliding-mode technique, said apparatus being able to overcome the drawbacks described above.

According to the present invention, a self-adaptive regulation apparatus for controlling the position of one or more actuators of an actuation system by means of the sliding-mode technique is provided, as indicated in Claim 1 and, preferably, in any one of the subsequent claims depending either directly or indirectly upon Claim 1.

According to the present invention, a method of operation of a self-adaptive regulation apparatus for controlling the position of one or more actuators of an actuation system by means of the sliding-mode technique is moreover provided as indicated in Claim 12 and, preferably, in any one of the subsequent claims depending either directly or indirectly upon Claim 12.

The present invention will now be described with reference to the annexed plate of drawings, which illustrates a nonlimiting example of embodiment thereof and in which:

- Figure 1 shows a block diagram of a self-adaptive regulation apparatus for controlling the position of actuators in an actuation system by means of the sliding-mode technique, provided according to the teachings of the present invention; and
- Figure 2 illustrates a flowchart indicating the operations implemented by the self-adaptive regulation apparatus during the automatic-configuration procedure.

The present invention is essentially based upon the principle of identifying a plurality of parameters which characterize an actuation system to be controlled, of determining, on the basis of the parameters identified, a control model based upon so-called sliding-mode theory, and of adapting a regulation apparatus of the actuation system on the basis of the control model determined.

In particular, the present invention is essentially based upon the idea of configuring in an automatic way, on the basis of the parameters identified, a "switching surface", which, as will be clearly described hereinafter, is designed to be used by the regulation apparatus during control of the actuation system.

It should be pointed out that the prerogative of the sliding-mode technique lies in the fact that, once the limits of intensity of the electrical control signal of the actuation system as a function of the performance required have been defined, the synthesis of a switching surface in the space of the states leads to definition of a regulating apparatus that is insensitive to the variations of the parameters and to the uncertainties that arise in the controlled actuation system.

In the case in point, starting from any initial condition, once the switching surface has been identified, the regulation apparatus is able to reach a state determined by the condition whereby the switching surface or the combination of a number of pre-set switching surfaces goes to zero in a finite time.

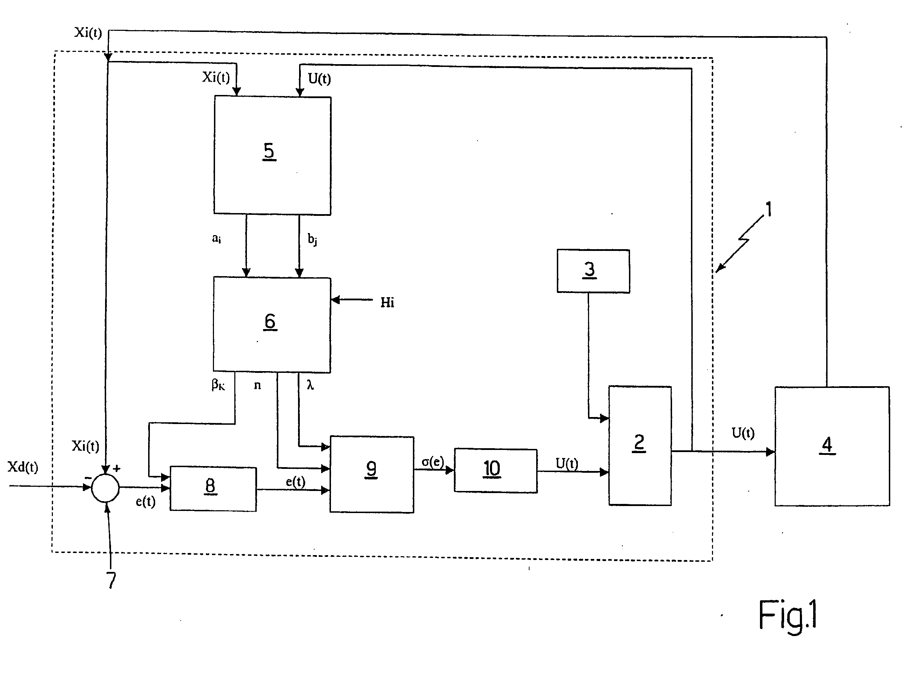

With reference to Figure 1, number 1 designates as a whole a regulation apparatus having the function of regulating the position of one or more actuators present in an actuation system according to the sliding-mode technique.

The regulation apparatus 1 basically comprises a power module 2, which has an input connected to a supply module 3, from which it receives an electrical-supply signal, and is able to generate at output a control signal U(t) designed to drive the actuation system 4 of the delivery valve (not illustrated) of the fluid in a turbine (not illustrated).

It should be pointed out that the actuation system 4 can comprise a servo mechanism, which in turn comprises one or more electrohydraulic or electromechanical actuators designed to perform as a whole the regulating action on the delivery valve (not illustrated). In particular, the actuators comprised in the actuation system 4 can present any configuration. For example, the actuators can be configured according to the class of actuation systems supplied "at low pressure" or to the class of actuation systems supplied "at medium pressure", in which use is envisaged, respectively, of a servo motor and of an electrohydraulic converter, which is constituted by a proportional valve that drives an intermediate servo cylinder and a proportional valve for large flow rates, or else according to the class of actuation systems supplied "at high pressure", in which use of a servo motor and a servo valve is envisaged.

The regulation apparatus 1 further comprises an identification module 5, which receives at input a series of measurement signals $X_i(t)$ correlated to the positions of the actuator or actuators comprised in the actuation system 4 and the control signal U(t) generated by the power module 2.

In the case in point, the measurement signals $X_i(t)$ are supplied at input to the identification module 5 by respective position-measurement sensors (not illustrated), which, according to the configuration of the actuation system 4, are able to supply a measurement signal $X_1(t)$ corresponding to the position $X_1$ of the servo motor (not illustrated), and/or a measurement signal $X_2(t)$ corresponding to the position $X_2$ of the cylinder of the electrohydraulic converter (not illustrated), and/or a measurement signal $X_3(t)$ corresponding to the position $X_3$ of the valve of the electrohydraulic converter (not illustrated), etc.

The identification module 5 is able to carry out a synchronized sampling of the measurement signals $X_i(t)$ and of the control signal U(t) at pre-set sampling intervals $T_c$ to determine the sampled values $X_K$ and $U_K$, and appropriately processes the latter so as to perform a parametric and structural identification of the actuation system 4. In the case in point, as will be described in detail hereinafter, the identification module 5 is able to process the sampled values $U_K$ of the control signal U(t) and the measurement parameters $X_K$ of the positions corresponding to the positions of the actuators present in the actuation system 4, implementing an algorithm for parametric and structural identification, which is designed to determine the transfer function G(z) of the actuation system 4.

In greater detail, implementing the algorithm of structural parametric identification, the identification module 5 is able to supply at output the parameters $b_i$ and $a_i$ (with i ranging from 1 to n), which characterize the polynomials in the numerator and in the denominator, respectively, of the transfer function G(z) of the actuation system 4.

The algorithm of structural and parametric identification implemented by the identification module 5 can correspond, for example, to the least-squares method, or to the recursive least-squares method with or without forgetting factor, or to the prediction-error gradient method, or any other similar method that will enable a parametric and structural identification of the actuation system 4 to be carried out.

For example, in the case where the least-squares method is implemented, if the sampled values $U_K$ of the control signal $U(t)$, and the values $X_K$ of the measurement signals are sampled at constant time intervals $T_c$, and the control signal $U(t)$ is variable in such a way as to excite the response of the actuation system 4, i.e., to cause moving of the actuators, then it is possible to determine a structural mathematical model, which identifies the actuation system 4 by means of the following relation:

$$X_K = \sum_{i=1}^{i=n} a_i \cdot X_{k-i} + \sum_{j=1}^{j=n} b_j \cdot U_{k-j}$$

where: $U_k$ and $X_k$ correspond, respectively, to the value of the control signal, i.e., of the input signal of the actuation system 4, and to the value of the measurement signal, i.e., of the output signal sampled at the instant $k*T_c$; n is the order of the actuation system; and, finally, $a_i$ and $b_j$ are the coefficients of the transfer function $G(z)$ correlated to the actuation system 4 to be identified.

Assuming that N measurements of the inputs (values $U_K$) and of the outputs (values $X_K$) have been made, the following two vectors are defined:

$$Y(N) = \begin{bmatrix} Y_n \\ : \\ Y_{n+N} \end{bmatrix} \quad \hat{\theta} = \begin{bmatrix} a_1 \\ : \\ a_n \\ b_1 \\ : \\ b_n \end{bmatrix}$$

from which the following regression matrix is obtained:

$$\Psi(N) = \begin{bmatrix} Y_{n-1} & \cdot\cdot & Y_0 & u_n & \cdot\cdot & u \\ : & : & : & : & : & : \\ Y_{n+N} & \cdot\cdot & Y_{N-n} & u_N & \cdot\cdot & u_{N-n} \end{bmatrix}$$

which yields to the following linear equation:

$$Y(N) = \Psi(N) \cdot \hat{\theta}$$

where: $\hat{\theta}$ is the vector of the real coefficients $a_i$, $b_j$.

Wishing to minimize the quadratic deviation between the measurements $Y(N)$ and an estimate $\hat{\theta}$ of the real coefficients $a_i$, $b_j$, i.e., in the case where the following functional is to be minimized:

$$J = \left(Y - \Psi \cdot \hat{\theta}\right)^T \cdot \left(Y - \Psi \cdot \hat{\theta}\right)$$

then

$$\hat{\theta} = \left(\Psi^T \cdot \Psi\right)^{-1} \cdot \Psi^T \cdot Y.$$

At this point, if $(\Psi^T \cdot \Psi)^{-1}$ is invertible, then the actuation system 4 is identifiable, and the real coefficients $a_i$, $b_j$ of the vector $\hat{\theta}$ define in an optimal way the transfer function G(z) of the actuation system 4. In this case, it is possible to derive the transfer function G(z) of the actuation system as follows:

$$G(z) = \frac{x(z)}{u(z)} = \frac{b_0 + \dots b_{n-1} \cdot z^{-(n-1)}}{1 + a_1 \cdot z^{-1} + \dots + a_n \cdot z^{-n}}$$

The system 1 further comprises a surface-generator module 6, which receives at input the parameters $a_i$ and $b_j$ that characterize the transfer function G(z) of the actuation system 4 and supplies at output the stable zeros $\beta_K$ derived from the function G(z) and the order n of the structural model associated to the actuation system 4.

In particular, the surface-generator module 6 identifies the number of poles $\alpha_k$ present in the denominator and the number of zeros in the numerator of the transfer function G(z), performs a discrimination of the stable zeros $\beta_K$ from the zeros identified and, on the basis of the number of poles $\alpha_k$ of the transfer function G(z), determines the order n of the actuation system 4.

The surface-generator module 6 is moreover designed to receive at input a set of information $H_i$ correlated to the electrical power available in the power module 2 for control of the position of the regulation valve (not illustrated) by the actuation system 4, a set of information $H_i$ regarding the positioning precision required, and a set of information $H_i$ regarding the dynamics of the response required of the actuation system 4.

The surface-generator module 6 is designed to process the information $H_i$ to determine a setting parameter $\lambda$ of the "switching surface".

With reference to Figure 1, the system 1 further comprises an adder module 7, which receives at a first input a signal $X_d(t)$ indicating the desired position, i.e., the position that the actuator comprised in the actuation system 4 must assume, and at a second input the signals $X_i(t)$ indicating the positions measured in the actuation system 4 and is designed to supply at output an error signal e(t), which corresponds to the difference between the desired position at the instant t encoded in the signal $X_d(t)$ and the positions measured in the actuation system 4 once again at the same instant t and encoded in the signals $X_i(t)$.

It should be pointed out that the adder module 7 determines the error signal e(t) both as a function of the configuration of the actuation system 4, i.e., of the order n of the structural model associated to the actuation system 4, and on the basis of the measurements of position $X_i(t)$ available.

The error signal e(t) can be calculated in the following ways:

- $e(t) = X_1(t) - X_d(t)$ in the case where only the position $X_1$ of the servo motor is available (a condition which occurs in the systems supplied at a low, medium, or high pressure);
- $e(t) = X_1(t) + X_2(t) - X_d(t)$ in the case where only the position $X_1$ of the servo motor and the position $X_2$ of the cylinder of the electrohydraulic converter is available (a condition that occurs in the systems supplied at low and medium pressure); or else
- $e(t) = X_1(t) + X_2(t) + X_3(t) - X_d(t)$ in the case where only the position $X_3$ of the valve of the servo motor is available (a condition that occurs only in the systems supplied at low pressure).

With reference to Figure 1, the system 1 further comprises a filtering module 8, which receives at input the error signal e(t) and the stable zeros $\beta_K$ and supplies at output the error signal e(t) itself filtered. In the case in point, the filtering module 7 is able, on the basis of the stable zeros $\beta_K$, to be configured in an automatic way so as to define a (lowpass) filter designed to filter from the error signal e(t) any possible noise or disturbance introduced into the position signals $X_i(t)$ during the measurement step and the sampling step.

The system 1 further comprises a synthesis module 9, which receives at input the setting parameter $\lambda$, the order n of the system, and the error signal e(t), and supplies at output the switching surface $\sigma(e)$, which can be determined by implementing a calculation algorithm based upon a first-order or second-order sliding-mode technique.

In the case in point, the synthesis module 9 has the function of synthesizing, i.e., of defining, the switching surface $\sigma(e)$ by applying the following relation:

$$\sigma(e) \;=\; (\frac{\delta}{\delta t} \;+\; \lambda)^{n-1} \;\cdot\; e(t),$$

in the case where the first-order sliding mode is implemented; or the following relation:

$$\sigma(e) \;=\; (\frac{\delta}{\delta t} \;+\; \lambda)^{n-2} \;\cdot\; e(t),$$

in the case where the second-order sliding mode is implemented.

In the above description it should be pointed out that the synthesis module 9 is able to define the order to be assigned to the switching or sliding surface $\sigma(e)$ on the basis of the number of poles of the transfer function and of the number and type of measurements of position $X_k$ available. For example, in a fifth-order actuation system, in which only the measurement $X_K$ of the position of the servo-motor is present, the synthesis module 9 generates a fourth-order surface (for first-order sliding modes) or a third-order surface (for second-order sliding modes). If, instead, the measurements of position available comprise the position of the servo motor and the position of the electrohydraulic converter, it is possible to assign a third-order or second-order sliding surface. In other words, once the order n is determined, the synthesis module 9 is able to identify the sliding surface also on the basis of the number of measurement parameters $X_k$. Finally, the system 1 comprises a generator module 10, which receives at input the first-order or second-order switching surface $\sigma(e)$ and, as a function of the latter, supplies at output the control signal $U(t) = f(\sigma(e))$.

In particular, in the case of implementation of the first-order sliding mode, the generator module 10 generates the control signal $U(t)$ by means of the following relation:

$$U(t) \;=\; -H^2 \mathrm{sign}[\sigma(e)];$$

whilst, in the case where the second-order sliding mode is implemented, the generator module 10 generates the signal $U(t)$ according to the following relation:

$$U(t) \;=\; -\alpha(t) \cdot H^2 \cdot \mathrm{sign}[\sigma(x,\, t) - \gamma \cdot \sigma_{MAX}(x,\, t)]$$

$$\alpha(t) \;=\; \begin{cases} \alpha_0, & [\sigma(x,\, t) - \gamma \cdot \sigma_{MAX}(x,\, t) \cdot \sigma_{MAX}(x,\, t) < 0] \\ 1, & [\sigma(x,\, t) - \gamma \cdot \sigma_{MAX}(x,\, t)] \cdot \sigma_{MAX}(x,\, t) \geq 0 \end{cases}$$

where: H is a pre-set gain envisaged in the control; $\gamma$ and $\alpha_0$ are pre-set quantities; whilst $\sigma_{MAX}$ corresponds to a peak value of the sliding surface at the instant t.

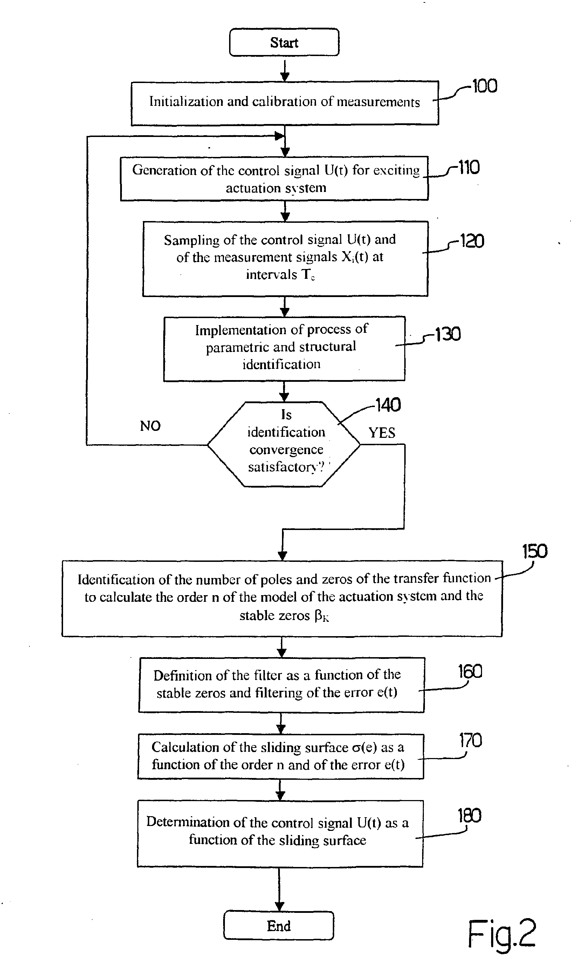

With reference to Figure 2, the method of operation of the regulation apparatus 1 will be described hereinafter.

Initially, the regulation apparatus 1 carries out an initialization and an automatic calibration of the measurement parameters $X_k$ regarding the positions of the actuators of the actuation system 4. In this step, the regulation apparatus 1 is able to move the actuators of the actuation system 4 in an automatic way and/or upon command by an operator, in complete opening or closing. During said initial movement, the regulation apparatus 1 verifies automatically which and how many are the measurements of position $X_i(t)$ that are active, i.e., available for control, and configures the scale range thereof normalizing in this way the signals $X_i(t)$ identified (block 100). In this way, the regulation apparatus 1 identifies the number and type of measurement parameters $X_k$ available and usable for the control configuration.

Following upon automatic calibration of the measurements, i.e., following upon identification and normalization of the position-measurement signals $X_i(t)$ available, the regulation apparatus 1 carries out the procedure of self-tuning, i.e., of self-adaptation of the control parameters of the actuation system 4.

The regulation apparatus 1 sets the control signal $U(t)$, which in this step performs the function of signal of excitation of the actuation system 4 (block 110). In particular, the control signal $U(t)$ can be determined as a function of the error signal e(t) indicated above, which, in the initial step, can correspond to the difference between the desired signal $X_d(t)$, which can be fixed, for example, at an initial value corresponding to $X_i(t)/2$, and the measurement signal $X_i(t)$ of the position of the servo motor corresponding to a position-measurement parameter $X_k$. Alternatively, the desired

signal $X_d(t)$ can correspond to a linear combination of a number of measurement parameters $X_k$.

In the step of excitation of the actuation system 4 by the power module 2, the control signal U(t) can be preferably generated according to a PWM (pulse-width modulation) technique, which envisages variation of the width of the pulses of the control signal U(t) as a function of the error signal e(t) in such a way as to move the servo motor of the actuation system 4 accordingly.

Following upon generation of the control signal U(t), i.e., following upon the excitation described above, the actuators of the actuation system 4 start movement, and at the same time the identification module 5 performs acquisition of the control signal U(t) and of the measurement signals $X_i(t)$ available, indicating the parameters $X_k$ measured in the actuation system 4 (block 120).

In the case in point, in this step, the identification module 5 performs sampling of the control signal U(t) and of the measurement signals $X_i(t)$ at pre-set intervals $T_c$ in a preferably synchronous way. It should be pointed out that sampling of the signals $X_i(t)$ and U(t) can preferably start when the actuation system 4 has reached a given stationary state.

Once acquisition of the data has been completed, the identification module 5 implements the algorithm of parametric identification on the data sampled $X_K$ and $U_k$ in order to estimate the parameters $a_i$ and $b_j$ of the transfer function G(z) that characterizes the structural mathematical model of the actuation system 4 (block 130).

As has been anticipated above, the algorithm of parametric identification implemented by the identification module 5 can correspond to the least-squares method described above. In this case, the identification module 5 verifies whether identification of the parameters $a_i$ and $b_j$ satisfies a given pre-set relation of convergence (block 140). It should be pointed out that, in the case where the least-squares method is implemented, said relation of convergences can be satisfied when $(\Psi^T \cdot \Psi)^{-1}$ is found to be invertible, and the estimate error e(t) satisfies a pre-set condition. Said pre-set condition can be satisfied, for example, if the error e(t) is smaller than a given threshold, set, for example, at $10^{-6}$.

If it is not (output NO from block 140), i.e., if identification of the parameters $a_i$ and $b_j$ is not convergent, then the regulation apparatus 1 returns to the initial condition (block 110), in which the power module 2 generates a new control signal U(t) in such a way as to start a new excitation and a consequent movement of the actuators of the actuation system 4. In this case, the method envisages reiteration of the functions of data acquisition, parametric identification, and comparison implemented in blocks 110, 120, 130 and 140.

Otherwise (output YES from block 140), i.e., if identification of the parameters $a_i$ and $b_j$ is convergent, then the surface-generator module 6 implements the control synthesis (block 150).

In detail, in this step, the surface-generator module 6 identifies the number of poles $\alpha_k$ and the number of zeros $\beta_k$ present, respectively, in the denominator and in the numerator of the transfer function G(z), and makes a discrimination of the stable zeros $\beta_K$ from the zeros identified. At this point, the surface-generator module 6 determines, on the basis of the number of poles $\alpha_k$ of the transfer function G(z), the order n of the mathematical model that characterizes the actuation system 4.

In the above description it should be pointed out that, in order to prevent conveniently generation of phenomena of instability due to states of saturation of the control, the surface-generator module 6 determines the setting parameter $\lambda$ in such a way as to satisfy preferably the following conditions:

$$\lambda < \frac{1}{5T_{MAX}} \; ; \quad \lambda < \frac{1}{10} F_c \; ; \; \lambda < 2 \cdot \alpha_m$$

where: $T_{MAX}$ is a temporal constant determined on the basis of the filtering bandwidth of the signals (described hereinafter); $F_c$ is the sampling frequency of the identification module 5, if obtained with a digital technology, and $\alpha_m$ is the dominant pole of the mathematical model of the actuation system 4 identified.

At this point the filtering module 8 is configured in an automatic way on the basis of the stable zeros $\beta_K$ and supplies at output the filtered error signal e(t) (block 160). Following upon self-configuration of the filtering module 8, the synthesis module 9 defines a first-order or second-order switching or sliding surface $\sigma(e)$ (block 170).

Once the switching or sliding surface $\sigma(e)$ is identified, the regulation apparatus 1 terminates the automatic-configuration step. In particular, following upon definition of the switching or sliding surface $\sigma(e)$, the generator module 10 generates the control signal U(t) for driving the position of the actuator or actuators of the actuation system 4 as a function of the configured switching or sliding surface $\sigma(e)$ (block 180).

In the above description it should be pointed out that, since the maximum order of the actuation system 4 to be identified does not exceed the sixth or seventh order, using the least-squares method and imposing an initial estimation order equal to the maximum possible order, it is possible to show that, if said order were overestimated, the method would converge, and the vector of the parameters identified $\hat{\theta}$ would in any case lead to a correct estimate. In particular, said estimate supplies the coefficients of the polynomials in the numerator and in the denominator of the transfer function G(z), which can be of a discrete type (z-transform, which can, on the other hand, be automatically converted into a continuous transform in the Laplace domain). The two polynomials can, in turn, be transformed into a factored zero-pole representation. With an appropriate choice of the tolerance, it is possible to cancelling out poles and zeros that are very close to one another and, consequently, reduce the absolute order of the model corresponding to the actuation system 4. In this way, the least-squares estimate, in the presence of an overestimated order, will enable in fact advantageous identification of the model corresponding to the actuation system in a correct way by cancelling out as mentioned above, to obtain a minimal identification.

The regulation apparatus 1 described above presents the major advantage of simplifying the operations of calibration of its own parameters and, in particular of the switching or sliding surface $\sigma(e)$, which can be used for controlling the position of the actuator or actuators of the actuation system 4, irrespective of the configuration, i.e., of the type of the actuation system itself, at the same time guaranteeing, thanks to the characteristics of sliding-mode control technique, a high robustness of the regulation.

Finally, it is clear that modifications and variations can be made to the regulation apparatus 1 described and illustrated herein, without thereby departing from the scope of the present invention, as defined by the annexed claims.

**Claims**

1. A self-adaptive regulation apparatus for controlling the position of at least one actuator in an actuation system (4) to drive a valve for regulation of the fluid evolving in a gas or steam or water turbine on the basis of a switching surface ($\sigma(e)$) according to the sliding-mode control technique, **characterized in that** it comprises:

   - signal-generator means (2,10), which generate a control signal (U(t)) of said actuation system (4) in such a way as to move said at least one actuator of said actuation system (4) into a series of positions in such a way as to drive said valve of the fluid in said turbine;
   - processing means (5, 6) designed to acquire a set of measurement parameters ($X_K$), each corresponding to the position measured at a given instant (t) in said at least one actuator of said actuation system (4) and a set of values of said control signal U(t) during said movement of said at least one actuator in said positions; said processing means (5, 6) being designed to implement an algorithm for identification of a structural model of the actuation system (4) in such a way as to determine, on the basis of said measurement position-parameters ($X_K$) and of the values ($U_K$) of said control signal (U(t)), a first parameter (n) indicating the order of the structural model corresponding to the actuation system (4); said processing means (5, 6) comprise identification means (5) which process said position-measurement parameters ($X_K$) and the values ($U_K$) of said control signal (U(t)) by implementing said algorithm for identification of a structural model of the actuation system (4); said algorithm implementing the least-squares method, or the recursive least-squares method, or the prediction-error gradient method;
   - synthesis means (9) receiving at input an error signal (e(t)) indicating the difference between a desired position ($X_d$) and at least one position ($X_K$) measured in said at least one actuator of the actuation system (4), and a second parameter ($\lambda$) associated to the setting of said switching surface ($\sigma(e)$);
   - said synthesis means (9) configures said switching surface (o(e)), which is used for controlling the position of said at least one actuator of the actuation system (4), as a function of said error signal (e(t)) and on the basis of the first parameter (n) and of said second parameter ($\lambda$) by implementing a calculation algorithm based upon a sliding-mode technique.

2. The regulation apparatus according to Claim 1, **characterized in that** said synthesis means (9) are designed to configure the switching surface ($\sigma(e)$) as a function of the first parameter (n) and of the number of said position-measurement parameters ($X_K$) available.

3. The regulation apparatus according to Claim 2, **characterized in that** said synthesis means (9) are designed to configure a switching surface ($\sigma(e)$) by implementing a calculation algorithm based upon a first-order sliding-mode technique according to the following relation:

$$\sigma(e) = (\frac{\ddot{d}}{dt} + \lambda)^{n-1} \cdot \bar{e}(t)$$

where: n is the order of the structural model identified corresponding to the actuation system (4); e(t) is the error signal; and $\lambda$ is the second setting parameter.

4. The regulation apparatus according to Claim 3, **characterized in that** said generator means (2,10) are designed to determine the control signal (U(t)) for control of said actuation system (4) according to the following relation:

$$U(t) = -H^2 \text{sign}[\sigma(e)]$$

where H is a pre-set constant.

5. The regulation apparatus according to Claim 2, **characterized in that** said synthesis means (9) are designed to configure a switching surface (o(e)) by implementing a calculation algorithm based upon the second-order sliding-mode technique according to the following relation:

$$\sigma(e) = (\frac{\overline{d}}{dt} + \lambda)^{n-2} \cdot e(t)$$

where: n is the order of the structural model identified corresponding to the actuation system (4); e(t) is the error signal; and $\lambda$ is the second setting parameter.

6. The regulation apparatus according to Claim 5, **characterized in that** said generator means (2,10) are designed to determine the control signal (U(t)) for control of said actuation system (4) according to the following relation:

$$U(t) = -\alpha(t) \cdot H^2 \cdot \text{sign}[\sigma(x, t) - \gamma \cdot \sigma_{MAX}(x, t)]$$

$$\alpha(t) = \begin{cases} \alpha_0, & [\sigma(x, t) - \gamma \cdot \sigma_{MAX}(x, t) \cdot \sigma_{MAX}(x, t) < 0] \\ 1, & [\sigma(x, t) - \gamma \cdot \sigma_{MAX}(x, t)] \cdot \sigma_{MAX}(x, t) \geq 0 \end{cases}$$

where: H is a pre-set gain envisaged in the control; $\gamma$ and $\alpha_0$ are pre-set quantities; whilst $\sigma_{MAX}$ corresponds to a peak value of the sliding surface at the instant t.

7. The regulation apparatus according to any one of Claims 2 to 6, **characterized in that** said identification means (5) are designed to implement the least-squares method on the position-measurement parameters ($X_K$) and on the values ($U_K$) of the control signal U(t) to estimate a set of third parameters ($a_i$, $b_j$) regarding a transfer function (G(z)) that characterizes the structural model of the actuation system (4).

8. The regulation apparatus according to Claim 7, **characterized in that** said identification means (5) comprise comparison means (140) designed to verify whether said third parameters ($a_i$, $b_j$) identified satisfy a given pre-set relation of convergence.

9. The regulation apparatus according to Claim 7 or Claim 8, **characterized in that** said processing means (5, 6) comprise surface-generator means (6), which are designed to identify the number of poles ($\alpha_k$) of said transfer function (G(z)) identified and determine the order (n) of the structural model of said actuation system (4) as a function of said number of poles ($\alpha_k$).

10. The regulation apparatus according to Claim 9, **characterized in that** said surface-generator means (6) are designed to receive at input a set of information ($H_i$) regarding the electrical power available for control of said actuation system (4), and/or the precision of positioning required, and/or the dynamics of the response required of the actuation system (4); said surface-generator means (6) being designed to generate said second parameter ($\lambda$) as a function of said information ($H_i$).

11. A method of operation of a self-adaptive regulation apparatus for controlling the position of at least one actuator in an actuation system (4) designed to drive a valve for regulation of the fluid evolving in a gas or steam or water turbine on the basis of a switching surface ($\sigma$(e)) according to the sliding-mode control technique; said method being **characterized in that** it comprises the following steps:

- generating (110) a control signal (U(t)) of said actuation system (4) in such a way as to move said at least one actuator of said movement system (4) into a series of positions in such a way as to drive said delivery valve of the fluid in said turbine;
- acquiring (120) a set of measurement parameters ($X_K$) each corresponding to the position measured at a given instant (t) in said at least one actuator of said actuation system (4), and the corresponding values ($U_K$) of said control signal (U(t)) during movement of said at least one actuator in said positions;
- processing (130,140,150,170) said position-measurement parameters ($X_K$) and the values ($U_K$) of the control signal (U(t)) by implementing an algorithm for identification of a structural model of the actuation system (4) in such a way as to determine a first parameter (n) indicating the order of the structural model corresponding to the actuation system (4); said step of processing (130,140,150,170) said measurement parameters ($X_K$) and the values ($U_K$) of said control signal U(t) comprises the step of implementing an algorithm corresponding to the least-squares method, or to the recursive least-squares method, or to the prediction-error gradient method.
- determining an error signal (e(t)) as a function of a desired position ($X_d$) and at least one position-measurement parameter ($X_K$); receiving a second parameter ($\lambda$) associated to the setting of said switching surface ($\sigma$(e))
- configuring (180) said switching surface ($\sigma$(e)), which is used for controlling the position of said at least one actuator of the actuation system (4) as a function of said error signal (e(t)) and on the basis of the first parameter (n) and of said second parameter ($\lambda$) by implementing a calculation algorithm based upon a sliding-mode technique.

**12.** The method according to Claim 11, **characterized in that** the configuration of said switching surface ($\sigma$(e)) is implemented as a function of the number of said measurement parameters ($X_K$) corresponding to the measured positions available in said at least one actuator of said actuation system (4).

**13.** The method according to Claim 12, **characterized in that** said step of configuring (180) said switching surface ($\sigma$(e)) comprises the step of implementing a calculation algorithm based upon the first-order sliding-mode technique according to the second following relation:

$$\sigma(e) = (\frac{d}{dt} + \lambda)^{n-1} \cdot e(t)$$

where: n is the order of the structural model identified corresponding to the actuation system (4); e(t) is the error signal; and $\lambda$ is the second setting parameter.

**14.** The method according to Claim 13, **characterized in that** said step of configuring (180) said switching surface ($\sigma$(e)) comprises the step of implementing a calculation algorithm based upon the second-order sliding-mode technique according to the second following relation:

$$\sigma(e) = (\frac{d}{dt} + \lambda)^{n-2} \cdot e(t)$$

where: n is the order of the structural model identified corresponding to the actuation system (4); e(t) is the error signal; and $\lambda$ is the second setting parameter.

**15.** The method according to Claim 14, **characterized in that** said step of processing (130,140,150,170) said measurement parameters ($X_K$) and the values ($U_K$) of said control signal U(t) comprises the step of implementing the least-squares method to estimate third parameters ($a_i$, $b_j$) regarding a transfer function (G(z)) that characterizes the structural model of the actuation system (4).

**16.** The method according to Claim 15, **characterized in that**, following upon estimation of third parameters ($a_i$, $b_j$) regarding said transfer function (G(z)) identified, it is verified (140) whether said third parameters ($a_i$, $b_j$) identified satisfy a pre-set relation of convergence.

**17.** The method according to Claim 16, **characterized in that** it comprises the step of identifying the number of poles ($\alpha_k$) of said transfer function (G(z)) identified to determine the order (n) of the structural model of said actuation system (4) as a function of said number of poles ($\alpha_k$).

**18.** The method according to any one of Claims 12 to 17, **characterized in that** it comprises the step of determining said second parameter ($\lambda$) as a function of the electrical power available for control of said actuation system, and/or the precision of positioning required, and/or the dynamics of the response required of the actuation system (4).

**Patentansprüche**

**1.** Selbstanpassende Regelvorrichtung zur Regelung der Position wenigstens einer Stelleinheit in einem Betätigungssystem (4) zum Antrieb eines Ventils zur Regelung des in einer Gas-, Dampf- oder Wasserturbine strömenden Fluids auf der Basis einer Schaltfläche ($\sigma$(e)) gemäß dem Gleitmodus-Steuerverfahren, **dadurch gekennzeichnet, dass** sie die folgenden Teile umfasst:

- Signalgeneratormittel (2, 10) zur derartigen Erzeugung eines Steuersignals (U(t)) des besagten Betätigungssystems (4), dass die besagte wenigstens eine Stelleinheit des besagten Betätigungssystems (4) so in eine Reihe von Positionen gebracht wird, dass das besagte Ventil für das Fluid in der besagten Turbine angetrieben wird;
- Verarbeitungmittel (5, 6) zur Erfassung eines Satzes von Messparametem ($X_K$), die jeweils der zu einem gegebenen Zeitpunkt (t) in der besagten wenigstens einen Stelleinheit des besagten Betätigungssystems (4) gemessenen Position entsprechen, und eines Satzes von Werten des besagten Steuersignals (U(t)) während der besagten Bewegung der besagten wenigstens einen Stelleinheit in der besagten Position, wobei die besagten Verarbeitungsmittel (5, 6) so zur Implementierung eines Algorithmus zur Identifizierung eines Strukturmodells des Betätigungssystems (4) ausgelegt sind, dass auf der Basis der besagten Messparameter ($X_K$) und Werte ($U_K$) des besagten Steuersignals (U(t)) ein erster Parameter (n) bestimmt wird, der die Ordnung des dem Betätigungssystem (4) entsprechenden Strukturmodells andeutet, wobei die besagten Verarbeitungsmittel (5, 6) Kennmittel (5) aufweisen, welche die besagten Messparameter ($X_K$) und Werte ($U_K$) des besagten Steuersignals (U(t)) durch Implementieren des besagten Algorithmus zur Identifizierung eines Strukturmodells des Betätigungssystems (4) verarbeiten, wobei der besagte Algorithmus die Methode der kleinsten Quadrate oder die Rekursionsmethode der kleinsten Quadrate oder das Fehlervorausage-Gradientenverfahren implementiert;
- Synthesemittel (9) zum Empfang eines Fehlersignals (e(t)) am Eingang, das die Differenz zwischen einer Sollposition ($X_d$) und wenigstens einer in der besagten wenigstens einen Stelleinheit des Betätigungssystems (4) gemessenen Position ($X_K$) sowie einen zweiten mit der Einstellung der besagten Schaltfläche ($\sigma$(e)) verbundenen Parameter ($\lambda$) andeutet;
- wobei die besagten Synthesemittel (9) die besagte Schaltfläche ($\sigma$(e)) konfigurieren, die zur Regelung der Position der besagten wenigstens einen Stelleinheit des Betätigungssystems (4) als Funktion des besagten Fehlersignals (e(t)) und auf der Basis des ersten Parameters (n) und des besagten zweiten Parameters ($\lambda$) durch Implementieren eines auf dem Gleitmodus-Verfahren beruhenden Berechnungsalgorithmus dient.

**2.** Regelvorrichtung nach Anspruch 1, **dadurch gekennzeichnet, dass** die besagten Synthesemittel (9) zur Konfiguration der Schaltfläche ($\sigma$(e)) als Funktion des ersten Parameters (n) und der Anzahl der verfügbaren besagten Positionsmessparameter ($X_K$) ausgelegt sind.

**3.** Regelvorrichtung nach Anspruch 2, **dadurch gekennzeichnet, dass** die besagten Synthesemittel (9) zur Konfiguration einer Schaltfläche ($\sigma$(e)) durch Implementieren eines auf einem Gleitmodus-Verfahren erster Ordnung beruhenden Berechnungsalgorithmus ausgelegt ist, und zwar gemäß der folgenden Beziehung:

$$\sigma(e) = (d/dt + \lambda)^{n-1} \cdot e(t),$$

wobei n die Ordnung des identifizierten dem Betätigungssystem (4) entsprechenden Strukturmodells, e(t) das Fehlersignal und $\lambda$ der zweite Einstellparameter ist.

**4.** Regelvorrichtung nach Anspruch 3, **dadurch gekennzeichnet, dass** die besagten Generatormittel (2, 10) zur Bestimmung des Steuersignals (U(t)) zur Steuerung des besagten Betätigungssystems (4) gemäß der folgenden Beziehung:

$$U(t) = -H^2 \text{sign}[\sigma(e)] \text{ ausgelegt sind,}$$

wobei H eine vorgegebene Konstante ist.

**5.** Regelvorrichtung nach Anspruch 2, **dadurch gekennzeichnet, dass** die besagten Synthesemittel (9) zur Konfiguration einer Schaltfläche ($\sigma(e)$) durch Implementieren eines auf einem Gleitmodus-Verfahren zweiter Ordnung beruhenden Berechnungsalgorithmus ausgelegt ist, und zwar gemäß der folgenden Beziehung:

$$\sigma(e) = (d/dt + \lambda)^{n-2} \cdot e(t),$$

wobei n die Ordnung des identifizierten dem Betätigungssystem (4) entsprechenden Strukturmodells, e(t) das Fehlersignal und $\lambda$ der zweite Einstellparameter ist.

**6.** Regelvorrichtung nach Anspruch 5, **dadurch gekennzeichnet, dass** die besagten Generatormittel (2, 10) zur Bestimmung des Steuersignals (U(t)) zur Steuerung des besagten Betätigungssystems (4) gemäß der folgenden Beziehung:

$$U(t) = -\alpha(t) \cdot H^2 \cdot \text{sign}[\sigma(x, t) - \gamma \cdot \sigma_{MAX}(x, t)]$$

$$\alpha(t) = \begin{cases} \alpha_0, [\sigma(x, t) - \gamma \cdot \sigma_{MAX}(x, t) \cdot \sigma_{MAX}(x, t) < 0] \\ 1, [\sigma(x, t) - \gamma \cdot \sigma_{MAX}(x, t)] \cdot \sigma_{MAX}(x, t) \geq 0 \end{cases}$$

ausgelegt sind, wobei H ein in der Steuerung angenommener vorgegebener Verstärkungsgrad ist, $\gamma$ und $\alpha_0$, vorgegebene Größen sind und $\sigma_{MAX}$ einem Spitzenwert der Gleitfläche zum Zeitpunkt t entspricht.

**7.** Regelvorrichtung nach einem der Ansprüche 2 bis 6, **dadurch gekennzeichnet, dass** die besagten Kennmittel (5) zur Implementierung der Methode der kleinsten Quadrate bei den Positionsmessparametern ($X_K$) und den Werten ($U_K$) des Steuersignals U(t) zur Schätzung eines dritten Satzes von Parametern ($a_i$, $b_j$) für eine Übertragungsfunktion (G(z)) ausgelegt sind, die das Strukturmodell des Betätigungssystems (4) kennzeichnet.

**8.** Regelvorrichtung nach Anspruch 7, **dadurch gekennzeichnet, dass** die besagten Kennmittel (5) Vergleichsmittel (140) aufweisen, die zur Verifizierung, ob die besagten dritten Parameter ($a_i$, $b_j$) eine vorgegebene Konvergenzbeziehung erfüllen, ausgelegt sind.

**9.** Regelvorrichtung nach Anspruch 7 oder 8, **dadurch gekennzeichnet, dass** die besagten Verarbeitungsmittel (5, 6) Oberflächengeneratormittel (6) aufweisen, die zur Identifizierung der Anzahl der Pole ($\alpha_k$) der besagten Übertragungsfunktion (G(z)) und zur Bestimmung der Ordnung (n) des Strukturmodells des besagten Betätigungssystems (4) als Funktion der besagten Anzahl der Pole ($\alpha_k$) ausgelegt sind.

**10.** Regelvorrichtung nach Anspruch 9, **dadurch gekennzeichnet, dass** die besagten Oberflächengeneratormittel (6) am Eingang zum Empfang eines Satzes von Information ($H_i$) über die zur Steuerung des besagten Betätigungssystems (4) verfügbare elektrische Leistung und/oder die erforderliche Positioniergenauigkeit und/oder die Dynamik des vom Betätigungssystem (4) geforderten Ansprechens ausgelegt sind, wobei die besagten Oberflächengeneratormittel (6) zum Generieren des besagten zweiten Parameters ($\lambda$) als Funktion der besagten Information ($H_i$) ausgelegt sind.

**11.** Verfahren zum Betrieb einer selbstanpassenden Regelvorrichtung zur Regelung der Position wenigstens einer Stelleinheit in einem Betätigungssystem (4) zum Antrieb eines Ventils zur Regelung des in einer Gas-, Dampf- oder Wasserturbine strömenden Fluids auf der Basis einer Schaltfläche ($\sigma$(e)) gemäß dem Gleitmodus-Steuerverfahren, **dadurch gekennzeichnet, dass** sie die folgenden Schritte umfasst:

- derartige Erzeugung eines Steuersignals (U(t)) des besagten Betätigungssystems (4), dass die besagte wenigstens eine Stelleinheit des besagten Betätigungssystems (4) so in eine Reihe von Positionen gebracht wird, dass das besagte Druckventil für das Fluid in der besagten Turbine angetrieben wird;

- Erfassung eines Satzes von Messparametem ($X_K$), die jeweils der zu einem gegebenen Zeitpunkt (t) in der besagten wenigstens einen Stelleinheit des besagten Betätigungssystems (4) gemessenen Position entsprechen, und der zugehörigen Werte ($U_K$) des besagten Steuersignals (U(t)) während der Bewegung der besagten wenigstens einen Stelleinheit in der besagten Position;

- Verarbeitung (130, 140, 150, 170) der besagten Positionsmessparameter ($X_K$) und Werte ($U_K$) des Steuersignals (U(t)) durch derartiges Implementieren eines Algorithmus zur Identifizierung eines Strukturmodells des Betätigungssystems (4), dass ein erster Parameter (n) bestimmt wird, der die Ordnung des dem Betätigungssystem (4) entsprechenden Strukturmodells andeutet, wobei der besagte Verarbeitungsschritt (130, 140, 150, 170) der besagten Messparameter ($X_K$) und Werte ($U_K$) des besagten Steuersignals (U(t)) den Schritt der Implementierung eines Algorithmus gemäß der Methode der kleinsten Quadrate oder der Rekursionsmethode der kleinsten Quadrate oder dem Fehlervoraussage-Gradientenverfahren umfasst;

- Bestimmung eines Fehlersignals (e(t)) als Funktion einer Sollposition ($X_d$) und wenigstens eines Positionsmessparameters ($X_K$);

- Empfang eines zweiten mit der Einstellung der besagten Schaltfläche ($\sigma$(e)) verbundenen Parameters ($\lambda$);

- Konfigurieren (180) der besagten Schaltfläche ($\sigma$(e)), die zur Regelung der Position der besagten wenigstens einen Stelleinheit des Betätigungssystems (4) als Funktion des besagten Fehlersignals (e(t)) und auf der Basis des ersten Parameters (n) und des besagten zweiten Parameters ($\lambda$) durch Implementieren eines auf dem Gleitmodus-Verfahren beruhenden Berechnungsalgorithmus dient.

12. Verfahren nach Anspruch 11, **dadurch gekennzeichnet, dass** die Konfiguration der besagten Schaltfläche ($\sigma$(e)) als Funktion der Anzahl der besagten Messparameter ($X_K$) durchgeführt wird, die den verfügbaren Messpositionen in der besagten wenigstens einen Stelleinheit des besagten Betätigungssystems (4) entsprechen.

13. Verfahren nach Anspruch 12, **dadurch gekennzeichnet, dass** der besagte Schritt der Konfiguration (180) der besagten Schaltfläche ($\sigma$(e)) den Schritt der Implementierung eines auf dem Gleitmodus-Verfahren erster Ordnung beruhenden Berechnungsalgorithmus umfasst, und zwar gemäß der folgenden Beziehung:

$$\sigma(e) = (d/dt + \lambda)^{n-1} \cdot e(t),$$

wobei n die Ordnung des identifizierten dem Betätigungssystem (4) entsprechenden Strukturmodells, e(t) das Fehlersignal und $\lambda$ der zweite Einstellparameter ist.

14. Verfahren nach Anspruch 13, **dadurch gekennzeichnet, dass** der besagte Schritt der Konfiguration (180) der besagten Schaltfläche ($\sigma$(e)) den Schritt der Implementierung eines auf dem Gleitmodus-Verfahren zweiter Ordnung beruhenden Berechnungsalgorithmus umfasst, und zwar gemäß der folgenden zweiten Beziehung:

$$\sigma(e) = (d/dt + \lambda)^{n-2} \cdot e(t),$$

wobei n die Ordnung des identifizierten dem Betätigungssystem (4) entsprechenden Strukturmodells, e(t) das Fehlersignal und $\lambda$ der zweite Einstellparameter ist.

15. Verfahren nach Anspruch 14, **dadurch gekennzeichnet, dass** der besagte Schritt der Verarbeitung (130, 140, 150, 170) der besagten Messparameter ($X_K$) und Werte ($U_K$) des besagten Steuersignals (U(t)) den Schritt der Implementierung der Methode der kleinsten Quadrate zur Schätzung der dritten Parameter ($a_i$, $b_j$) für eine Übertragungsfunktion (G(z)) umfasst, die das Strukturmodell des Betätigungssystems (4) kennzeichnet.

16. Verfahren nach Anspruch 15, **dadurch gekennzeichnet, dass** nach der Schätzung der dritten Parameter ($a_i$, $b_j$)

für die identifizierte Übertragungsfunktion (G(z)) verifiziert wird, ob die besagten identifizierten dritten Parameter ($a_i$, $b_j$) eine vorgegebene Konvergenzbeziehung erfüllen.

17. Verfahren nach Anspruch 16, **dadurch gekennzeichnet, dass** es den Schritt der Identifizierung der Anzahl der Pole ($\alpha_k$) der besagten Übertragungsfunktion (G(z)) zur Bestimmung der Ordnung (n) des Strukturmodells des besagten Betätigungssystems (4) als Funktion der besagten Anzahl der Pole ($\alpha_k$) umfasst.

18. Verfahren nach einem der Ansprüche 12 bis 17, **dadurch gekennzeichnet, dass** es den Schritt der Bestimmung des besagten zweiten Parameters ($\lambda$) als Funktion der zur Steuerung des besagten Betätigungssystems (4) verfügbaren elektrischen Leistung und/oder der erforderlichen Positioniergenauigkeit und/oder der Dynamik des vom Betätigungssystem (4) geforderten Ansprechens umfasst.

**Revendications**

1. Appareil de régulation auto-adaptatif permettant de commander la position d'au moins un actionneur dans un système d'actionnement (4) permettant d'entraîner une vanne de régulation du fluide évoluant dans une turbine à gaz, à vapeur ou à eau sur la base d'une surface de commutation ($\sigma(e)$) selon la technique de commande du mode de glissement, **caractérisé en ce qu'**il comprend :

   - un moyen générateur de signaux (2, 10), qui génère un signal de commande (U(t)) dudit système d'actionnement (4) de façon à déplacer ledit au moins un actionneur dudit système d'actionnement (4) dans une série de positions afin d'entraîner ladite vanne du fluide dans ladite turbine ;
   - un moyen de traitement (5, 6) conçu pour acquérir un ensemble de paramètres de mesure ($X_K$), correspondant chacun à la position mesurée à un instant donné (t) dans ledit au moins un actionneur dudit système d'actionnement (4), et un ensemble de valeurs dudit signal de commande U(t) pendant ledit mouvement dudit au moins un actionneur dans lesdites positions ; ledit moyen de traitement (5, 6) étant conçu afin de mettre en oeuvre un algorithme d'identification d'un modèle structurel du système d'actionnement (4) de façon à déterminer, sur la base desdits paramètres de position de mesure ($X_K$) et des valeurs ($U_K$) dudit signal de commande (U(t)), un premier paramètre (n) indiquant l'ordre du modèle structurel correspondant au système d'actionnement (4) ; ledit moyen de traitement (5, 6) comprenant un moyen d'identification (5) qui traite lesdits paramètres de mesure de la position ($X_K$) et les valeurs ($U_K$) dudit signal de commande (U(t)) en mettant en oeuvre ledit algorithme d'identification d'un modèle structurel du système d'actionnement (4) ; ledit algorithme mettant en oeuvre le procédé des moindres carrés, ou le procédé des moindres carrés récursif, ou le procédé des gradients d'erreurs de prédiction ;
   - un moyen de synthèse (9) recevant au niveau d'une entrée un signal d'erreur (e(t)) indiquant la différence entre une position souhaitée ($X_d$) et au moins une position ($X_K$) mesurée dans ledit au moins un actionneur du système d'actionnement (4), et un second paramètre ($\lambda$) associé au réglage de ladite surface de commutation ($\sigma(e)$) ;
   - ledit moyen de synthèse (9) configure ladite surface de commutation ($\sigma(e)$), qui est utilisée afin de commander la position dudit au moins un actionneur du système d'actionnement (4), en fonction dudit signal d'erreur (e(t)) et sur la base du premier paramètre (n) et dudit second paramètre ($\lambda$) en mettant en oeuvre un algorithme de calcul basé sur une technique à mode de glissement.

2. Appareil de régulation selon la revendication 1, **caractérisé en ce que** ledit moyen de synthèse (9) est conçu afin de configurer la surface de commutation ($\sigma(e)$) en fonction du premier paramètre (n) et du nombre desdits paramètres de mesure de la position ($X_K$) disponibles.

3. Appareil de régulation selon la revendication 2, **caractérisé en ce que** ledit moyen de synthèse (9) est conçu afin de configurer une surface de commutation ($\sigma(e)$) en mettant en oeuvre un algorithme de calcul basé sur une technique à mode de glissement de premier ordre selon la relation suivante :

$$\sigma(e) = \left(\frac{d}{dt} + \lambda\right)^{n-1} \cdot e(t)$$

où : n est l'ordre du modèle structurel identifié correspondant au système d'actionnement (4) ; e(t) est le signal d'erreur ; et λ est le second paramètre de réglage.

4. Appareil de régulation selon la revendication 3, **caractérisé en ce que** ledit moyen générateur (2, 10) est conçu afin de déterminer le signal de commande (U(t)) pour la commande dudit système d'actionnement (4) selon la relation suivante :

$$U(t) = -H^2 \text{sign}\big[\sigma(e)\big]$$

où H est une constante prédéfinie.

5. Appareil de régulation selon la revendication 2, **caractérisé en ce que** ledit moyen de synthèse (9) est conçu afin de configurer une surface de commutation (σ(e)) en mettant en oeuvre un algorithme de calcul basé sur la technique à mode de glissement de second ordre selon la relation suivante :

$$\sigma(e) = \left(\frac{d}{dt} + \lambda\right)^{n-2} \cdot e(t)$$

où : n est l'ordre du modèle structurel identifié correspondant au système d'actionnement (4) ; e(t) est le signal d'erreur ; et λ est le second paramètre de réglage.

6. Appareil de régulation selon la revendication 5, **caractérisé en ce que** ledit moyen générateur (2, 10) est conçu afin de déterminer le signal de commande (U(t)) pour la commande dudit système d'actionnement (4) selon la relation suivante :

$$U(t) = -\alpha(t) \cdot H^2 \cdot \text{sign}\big[\sigma(x, t) - \gamma \cdot \sigma_{\text{MAX}}(x, t)\big]$$

$$\alpha(t) = \begin{cases} \alpha_0, & \big[\sigma(x, t) - \gamma \cdot \sigma_{\text{MAX}}(x, t) \cdot \sigma_{\text{MAX}}(x, t) < 0\big] \\ 1, & \big[\sigma(x, t) - \gamma \cdot \sigma_{\text{MAX}}(x, t)\big] \cdot \sigma_{\text{MAX}}(x, t) \geq 0 \end{cases}$$

où : H est un gain prédéfini envisagé lors de la commande ; $\gamma$ et $\alpha_0$ sont des quantités prédéfinies ; tandis que $\sigma_{\text{MAX}}$ correspond à une valeur de crête de la surface de glissement à l'instant t.

7. Appareil de régulation selon l'une quelconque des revendications 2 à 6, **caractérisé en ce que** ledit moyen d'identification (5) est conçu afin de mettre en oeuvre le procédé des moindres carrés sur les paramètres de mesure de la position ($X_K$) et sur les valeurs ($U_K$) du signal de commande U(t) afin d'estimer un ensemble de troisièmes paramètres ($a_i$, $b_j$) relatifs à une fonction de transfert (G(z)) qui caractérise le modèle structurel du système d'actionnement (4).

8. Appareil de régulation selon la revendication 7, **caractérisé en ce que** ledit moyen d'identification (5) comprend un moyen de comparaison (140) conçu pour vérifier si lesdits troisièmes paramètres ($a_i$, $b_j$) identifiés satisfont une relation de convergence prédéfinie donnée.

9. Appareil de régulation selon la revendication 7 ou la revendication 8, **caractérisé en ce que** ledit moyen de traitement (5, 6) comprend un moyen générateur de surface (6), qui est conçu pour identifier le nombre de pôles ($\alpha_k$) de ladite fonction de transfert (G(z)) identifiée et déterminer l'ordre (n) du modèle structurel dudit système d'actionnement (4) en fonction dudit nombre de pôles ($\alpha_k$).

10. Appareil de régulation selon la revendication 9, **caractérisé en ce que** ledit moyen générateur de surface (6) est conçu afin de recevoir au niveau d'une entrée un ensemble d'informations ($H_j$) relatives à la puissance électrique disponible pour la commande dudit système d'actionnement (4), et/ou à la précision de positionnement nécessaire, et/ou à la dynamique de la réponse nécessaire du système d'actionnement (4) ; ledit moyen générateur de surface (6) étant conçu afin de générer ledit second paramètre ($\lambda$) en fonction desdites informations ($H_i$).

11. Procédé de fonctionnement d'un appareil de régulation auto-adaptatif permettant de commander la position d'au moins un actionneur dans un système d'actionnement (4) conçu pour entraîner une vanne de régulation du fluide évoluant dans une turbine à gaz, ou à vapeur ou à eau sur la base d'une surface de commutation ($\sigma(e)$) selon la technique de commande à mode de glissement ; ledit procédé étant **caractérisé en ce qu'**il comprend les étapes suivantes :

- la génération (110) d'un signal de commande (U(t)) dudit système d'actionnement (4) de façon à déplacer ledit au moins un actionneur dudit système de mouvement (4) dans une série de positions de façon à entraîner ladite vanne de refoulement du fluide dans ladite turbine ;
- l'acquisition (120) d'un ensemble de paramètres de mesure ($X_K$) correspondant chacun à la position mesurée à un instant donné (t) dans ledit au moins un actionneur dudit système d'actionnement (4), et des valeurs correspondantes ($U_K$) dudit signal de commande (U(t)) pendant le mouvement dudit au moins un actionneur dans lesdites positions ;
- le traitement (130, 140, 150, 170) desdits paramètres de mesure de la position ($X_K$) et des valeurs ($U_K$) du signal de commande (U(t)) en mettant en oeuvre un algorithme d'identification d'un modèle structurel du système d'actionnement (4) de façon à déterminer un premier paramètre (n) indiquant l'ordre du modèle structurel correspondant au système d'actionnement (4) ; ladite étape de traitement (130, 140, 150, 170) desdits paramètres de mesure ($X_K$) et des valeurs ($U_K$) dudit signal de commande U(t) comprenant l'étape de mise en oeuvre d'un algorithme correspondant au procédé des moindres carrés, ou au procédé des moindres carrés récursif, ou au procédé des gradients d'erreur de prédiction ;
- la détermination d'un signal d'erreur (e(t)) en fonction d'une position souhaitée ($X_d$) et d'au moins un paramètre de mesure de la position ($X_K$) ;
- la réception d'un second paramètre ($\lambda$) associé au réglage de ladite surface de commutation ($\sigma(e)$) ;
- la configuration (180) de ladite surface de commutation ($\sigma(e)$), qui est utilisée afin de commander la position dudit au moins un actionneur du système d'actionnement (4) en fonction dudit signal d'erreur (e(t)) et sur la base du premier paramètre (n) et dudit second paramètre ($\lambda$) en mettant en oeuvre un algorithme de calcul basé sur une technique à mode de glissement.

12. Procédé selon la revendication 11, **caractérisé en ce que** la configuration de ladite surface de commutation ($\sigma(e)$) est mise en oeuvre en fonction du nombre desdits paramètres de mesure ($X_K$) correspondant aux positions mesurées disponibles dans ledit au moins un actionneur dudit système d' actionnement (4).

13. Procédé selon la revendication 12, **caractérisé en ce que** ladite étape de configuration (180) de ladite surface de commutation ($\sigma(e)$) comprend l'étape de mise en oeuvre d'un algorithme de calcul basé sur la technique à mode de glissement de premier ordre selon la seconde relation suivante :

$$\sigma(e) = (\frac{d}{dt} + \lambda)^{n-1} \cdot e(t)$$

où : n est l'ordre du modèle structurel identifié correspondant au système d'actionnement (4) ; e(t) est le signal d'erreur ; et $\lambda$ est le second paramètre de réglage.

14. Procédé selon la revendication 13, **caractérisé en ce que** ladite étape de configuration (180) de ladite surface de commutation ($\sigma(e)$) comprend l'étape de mise en oeuvre d'un algorithme de calcul basé sur la technique à mode de glissement de second ordre selon la seconde relation suivante :

$$\sigma(e) = (\frac{d}{dt} + \lambda)^{n-2} \cdot e(t)$$

où : n est l'ordre du modèle structurel identifié correspondant au système d'actionnement (4) ; e(t) est le signal

d'erreur ; et $\lambda$ est le second paramètre de réglage.

**15.** Procédé selon la revendication 14, **caractérisé en ce que** ladite étape de traitement (130, 140, 150, 170) desdits paramètres de mesure ($X_K$) et des valeurs ($U_K$) dudit signal de commande U(t) comprend l'étape de mise en oeuvre du procédé des moindres carrés afin d'estimer des troisièmes paramètres ($a_i$, $b_j$) relatifs à une fonction de transfert (G(z)) qui caractérise le modèle structurel du système d'actionnement (4).

**16.** Procédé selon la revendication 15, **caractérisé en ce que**, après l'estimation des troisièmes paramètres ($a_i$, $b_j$) relatifs à ladite fonction de transfert (G(z)) identifiée, il est vérifié (140) si lesdits troisièmes paramètres ($a_i$, $b_j$) identifiés satisfont une relation de convergence prédéfinie.

**17.** Procédé selon la revendication 16, **caractérisé en ce qu'**il comprend l'étape d'identification du nombre de pôles ($\alpha_k$) de ladite fonction de transfert (G(z)) identifiée afin de déterminer l'ordre (n) du modèle structurel dudit système d'actionnement (4) en fonction dudit nombre de pôles ($\alpha_k$).

**18.** Procédé selon l'une quelconque des revendications 12 à 17, **caractérisé en ce qu'**il comprend l'étape de détermination dudit second paramètre ($\lambda$) en fonction de la puissance électrique disponible pour la commande dudit système d'actionnement, et/ou de la précision de positionnement nécessaire, et/ou de la dynamique de la réponse nécessaire du système d'actionnement (4).

Fig.1

Fig.2

**EP 1 720 081 B1**

**Patent documents cited in the description**

- US 5988848 A
- US 6574544 B
- EP 0446362 A